# EUROPÄISCHE PATENTSCHRIFT

(11) **EP 0 968 077 B1**
(45) Veröffentlichungstag und Bekanntmachung des Hinweises auf die Patenterteilung: **06.03.2002**
(21) Anmeldenummer: 98966774.6
(22) Anmeldetag: 15.12.1998
(51) Int. Cl.: B29C 44/34, B29B 9/16

(54) **VERFAHREN ZUR HERSTELLUNG EINES AUFGESCHÄUMTEN GRANULATES UND DURCH DIESES VERFAHREN HERSTELLBARES AUFGESCHÄUMTES GRANULAT**
METHOD FOR PRODUCING A FOAMED GRANULATE AND FOAMED GRANULATE AS PRODUCED BY THAT METHOD
PROCEDE POUR LA FABRICATION DE GRANULES EXPANSES ET GRANULES EXPANSES TELS QUE FABRIQUES PAR CE PROCEDE

(30) Priorität: 18.12.1997 DE 19756264
(43) Veröffentlichungstag der Anmeldung: 05.01.2000
(73) Patentinhaber: Gefinex Polymerschäume GmbH, 33803 Steinhagen (DE)
(72) Erfinder: BRUNING, Jürgen, D-33824 Werther (DE); DESEKE, Otto, D-31275 Lehrte (DE); MEYKE, Joachim, D-99894 Friedrichroda (DE)
(74) Vertreter: Braun, Dieter, Dipl.-Ing.
(86) Internationale Anmeldenummer: DE9803692
(87) Internationale Veröffentlichungsnummer: WO9932271

(56) Entgegenhaltungen:
- EP-A- 0 700 939
- US-A- 4 606 873
- US-A- 5 234 963
- PATENT ABSTRACTS OF JAPAN vol. 009, no. 142 (M-388), 18. Juni 1985 & JP 60 021208 A (ASAHI KASEI KOGYO KK), 2. Februar 1985

## Beschreibung

Die Erfindung betrifft ein Verfahren zur Herstellung eines aufgeschäumten Granulates, wobei in einen Extruder ein thermoplastischer Kunststoff eingegeben, der Kunststoff aufgeschmolzen und über eine oder mehrere Einspritzdüsen ein Treibmittel unter Druck zugeführt wird und die mit dem Treibmittel angereicherte Schmelze über eine am Extruderaustritt angeordnete Lochplatte aufschäumend austritt und von einer hinter der Lochplatte angeordneten Schneideinrichtung granuliert wird.

Ein solches Verfahren ist z.B. aus der EP-A-0 700 939 bekannt.

Aufgeschäumte Granulate werden zur Herstellung von Formteilen verwendet, die eine geschäumte Struktur aufweisen. Es handelt sich hierbei beispielsweise um Verpackungen bzw. um Innenteile von Kraftfahrzeugen. Grundsätzlich ist es erwünscht, daß das aufgeschäumte Granulat eine abgerundete, nach Möglichkeit kugelförmige Gestalt besitzt, die den Transport und das Eingeben des Granulates in die Formen begünstigt.

Es ist bereits bekannt geworden, eine mit einem Treibmittel angereicherte Schmelze eines thermoplastischen Kunststoffes über eine am Extruderaustritt angeordnete Lochplatte in die Atmosphäre aufschäumend austreten zu lassen. Mittels eines hinter der Lochplatte angeordneten Wasserringgranulators erfolgt dann ein Granulieren bei gleichzeitigem Aufschäumen des Materials in der Atmosphäre. Hier ist es nachteilig, daß das Granulat eine kraterförmig zerklüftete Oberfläche aufweist. Die Oberflächenunebenheiten sind nachteilig bei der für die Herstellung von Formteilen erforderlichen Befüllung der Formen.

In der DE 39 25 740 A1 ist auch bereits ein Verfahren offenbart, bei dem ein Aufschäumen der Schmelze verhindert wird, indem die Stränge durch eine unterhalb einer Wasseroberfläche liegenden Düse unmittelbar in ein Wasserbad extrudiert und auf Temperaturen unterhalb des Erweichungspunktes abgekühlt werden. Das Granulieren der nicht aufgeschäumten Stränge erfolgt hier später in einem weiteren Bearbeitungsvorgang, wobei ein expandierbares Granulat mit einer scharfkantigen Oberfläche entsteht.

Durch die DE 195 47 398 ist es auch bereits bekannt geworden, ein kugelförmiges Granulat herzustellen, indem die Schmelze in einen Unterwassergranulator extrudiert wird. Hier ist es jedoch erforderlich, das Granulat in einem zweiten Verfahrensschritt in einen druckfesten Reaktor einzugeben und mit einem Treibmittel anzureichern. Das Aufschäumen des Granulates erfolgt dann beim Druckabbau im Reaktor. Bei diesem Verfahren ist es nachteilig, daß die Herstellung eines aufgeschäumten Granulates in zwei aufwendigen Verfahrensschritten erfolgt.

Durch die EP 0 411 437 ist es bereits bekannt geworden, das Treibmittel einem Polymeren bereits im Extruder zuzugeben, wobei dann die Schmelze in ein Kühlmedium extrudiert wird, wobei ein Aufschäumen jedoch ausdrücklich vermieden wird. Das Aufschäumen erfolgt in einem nachfolgenden Arbeitsgang beim Verpressen des Granulates zu einer Platte verbunden mit einer sich anschließenden Druckerniedrigung.

Der Erfindung liegt die Aufgabe zugrunde, die genannten Nachteile zu vermeiden und in einem einzigen Verfahrensschritt ein feinporiges Granulat mit einer geschlossenen und abgerundeten Oberfläche herzustellen.

Diese Aufgabe wird erfindungsgemäß durch ein Verfahren gemäß Anspruch 1 und ein aufgeschäumtes Granulat gemäß dem unabhängigen Anspruch 5 gelöst. Die weitere Ausgestaltung der Erfindung ist den abhängigen Ansprüchen zu entnehmen.

Indem die Schmelze aus der Lochplatte, kontrolliert gekühlt, unmittelbar in ein strömendes Kühlmedium austritt und die Temperatur der Schmelze, die Temperatur des Kühlmediums sowie der Druck im Kühlmedium so eingestellt werden, daß beim Austritt aus der Lochplatte die Oberfläche der Schmelze unmittelbar zu einem glattflächigen geschlossenen Film mit einer Dicke von 10 bis 500 µm, vorzugsweise 20 bis 200 µm erstarrt, unter dem die Schmelze aufschäumt, wird erreicht, daß in einem einzigen Verfahrensschritt ein Granulat mit einer vorteilhaften abgerundeten Oberfläche und einer optimalen Schüttdichte von 10 bis 600 g/l ausgebildet wird. Hierfür ist lediglich der Einsatz eines Extruders mit einer Einrichtung zur Direkteinspritzung eines Treibmittels und mit einer am Extruderausgang angeordneten Lochplatte, an die sich ein Granulator anschließt erforderlich, wobei hinter der Lochplatte im Granulator ein strömendes Kühlmedium wirksam ist, in das die Schmelze direkt austritt.

Gemäß einer bevorzugten Ausführungsform der Erfindung tritt die Schmelze aus der Lochplatte in das strömende Wasser eines Unterwassergranulators aus. Neben einer kontrollierten Abkühlung bewirkt das strömende Wasser des Granulators eine sichere Abfuhr des Granulates, ohne daß ein Verkleben eintreten kann.

Vorzugsweise wird in den Extruder als thermoplastischer Kunststoff ein Polypropylen eingegeben. Die Temperatur des Kühlmediums liegt dann bei 20 bis 80° C, die Temperatur der Schmelze beim Austritt aus der Lochplatte beträgt 190 bis 210° C und im Bereich des Kühlmediums ist ein Druck von 1 bar wirksam. Sofern andere Materialien verarbeitet werden, kann die Temperatur der Schmelze zwischen 100 bis 300° C, vorzugsweise zwischen 160 bis 260° C liegen. Wie sich gezeigt hat, kommt es beim Austritt der Schmelze aus der Lochplatte zur unmittelbaren Ausbildung eines glattflächigen, geschlossenen, elastischen Filmes an der Oberfläche der Schmelze. Die darunter aufschäumende Schmelze bewirkt eine elastische Verformung des Filmes, wobei ein Granulat mit einer abgerundeten, etwa kugelförmigen glatten Oberfläche ausgebildet wird. Wie sich gezeigt hat, bewirkt der das Granulat elastisch umhüllende Film zudem ein vorteilhaftes, sehr feinzelliges Aufschäumen. Der Durchmesser des Granulates kann über die Größe der Löcher der Lochplatte gesteuert werden. Die Durchmesser der Löcher der Lochplatte können so ausgewählt werden, daß das Granulat einen Durchmesser von etwa 1 bis 20 mm, vorzugsweise 2 bis 8 mm, aufweist.

Es ist durchaus überraschend, daß erfindungsgemäß durch das gebremste Aufschäumen der Schmelze ein etwa kugelförmiges Granulat mit glatter Oberfläche erhalten wird. Die Fachwelt war bisher der Auffassung, daß ein Aufschäumen der Schmelze beim Austritt aus der Lochplatte dazu führt, daß das ausgebildete Granulat eine kraterförmig zerklüftete Oberfläche aufweist. Diese Oberfläche resultiert daraus, daß während des Aufschäumens der Schmelze in der Flugphase eine derart verzögerte Abkühlung eintritt, daß in dieser Phase Treibmittel intensiv an der Oberfläche austreten kann. Die aufgerissene, kraterförmig zerklüftete Struktur der Oberfläche bleibt beim Erstarren der Schmelze erhalten und wird durch den leichten Schrumpf des Materials bei dessen Abkühlung sogar noch verstärkt.

Demgegenüber wird durch die erfindungsgemäße unmittelbar kontrollierte Kühlung der Schmelze eine unmittelbare Ausbildung eines geschlossenen elastischen Films an deren Oberfläche erreicht. Wie sich gezeigt hat, kommt es offenbar zu der Ausbildung eines Films ausreichender Festigkeit bereits gleichzeitig mit dem Beginn des Aufschäumens der Schmelze. Dieses hat den Effekt, daß durch den ausgebildeten Film in dessen Erstarrungsphase nur wenig Treibmittel austritt und somit eine geschlossene, glatte Oberfläche ausgebildet wird. Der Film wird vielmehr vom frei werdenden Treibmittel elastisch gedehnt, wobei in vorteilhafter Weise die geschlossene, glatte Oberfläche erhalten bleibt und sich zudem ein etwa kugelförmiges Granulat ausbildet.

Die Erfindung soll im Folgenden beispielhaft erläutert werden.

### Beispiel 1

In einem Einschneckenextruder mit einem Durchmesser von 90 mm wird ein Polypropylenblock-Copolymerisat mit einem Schmelzeindex M_{I} = 0,9 dem als Nukleierungsmittel Hydrocerol (Fa. Boehringer) zugesetzt ist, verarbeitet. Dem Polypropylenblock-Copolymerisat wird als Treibmittel ein ISO-Butan mit 6,2 Gew.-% des Polymers zugesetzt. Das Polymer wird im Einschneckenextruder aufgeschmolzen und tritt durch eine am Ausgang des Extruders angeordnete Granulatorlochplatte eines Unterwassergranulators aus. Die Granulatorlochplatte ist mit 80 Löchern mit einem Durchmesser von 2,8 mm versehen. Das im Unterwassergranulator strömende Wasser hat eine Temperatur von 53° C, der Druck beträgt 1 bar. Als Ergebnis ergibt sich ein geschäumtes, etwa kugelförmiges Granulat mit glatter Oberfläche und einem Durchmesser von 3,5 bis 7,5 mm. Die Schüttdichte des Granulates beträgt 100 g/l. Die Schmelzetemperatur beträgt vor der Schneidplatte 195° C.

### Beispiel 2

Einem Einschneckenextruder mit einem Schneckendurchmesser von 90 mm wird ein Polypropylenblock-Copolymerisat mit einem Schmelzeindex M_{I} = 0,54 zusammen mit Hydrocerol der Firma Boehringer als Nukleierungsmittel zugeführt. Als Treibmittel wird ISO-Butan in einem Anteil von 15 Gew.-% des Polymers zugeführt. Am Extruderausgang ist eine Lochplatte eines Unterwassergranulators mit 70 Löchern mit einem Durchmesser von 1,5 mm angeordnet. Das Polymer erreicht vor der Schneidplatte eine Temperatur von 190° C und tritt in das strömende Wasser des Unterwassergranulators, das eine Temperatur von 65° C hat, aus. Die Schmelze wird dort mit einer Schneidvorrichtung granuliert. Als Ergebnis ergeben sich geschäumte, etwa kugelförmige Partikel mit einem Durchmesser von 5 bis 7 mm und einer Schüttdichte von 20 g/l.

Das oben erhaltene geschäumte Granulat wird in Formen eingegeben und durch Verschweißen zu Formteilen verarbeitet. Die erhaltenen Formteile weisen eine glatte, geschlossene Oberfläche auf, wodurch die Wasseraufnahme verhindert und die mechanische Stabilität erhöht wird. Der erfindungsgemäß erzeugte glattflächige, geschlossene Film, der den aufgeschäumten Kern eines jeden Granulatteilchens umhüllt, bildet im Formteil wabenartige Strukturen, die die Formstabilität wesentlich erhöhen.

## Patentansprüche

1. Verfahren zur Herstellung eines aufgeschäumten Granulates, wobei in einen Extruder ein thermoplastischer Kunststoff eingegeben, der Kunststoff aufgeschmolzen und über eine oder mehrere Einspritzdüsen ein Treibmittel unter Druck zugeführt wird und die mit dem Treibmittel angereicherte Schmelze über eine am Extruderaustritt angeordnete Lochplatte aufschäumend austritt und von einer hinter der Lochplatte angeordneten Schneideinrichtung granuliert wird, **dadurch gekennzeichnet, daß** die Schmelze aus der Lochplatte kontrolliert gekühlt, unmittelbar in ein strömendes Kühlmedium austritt, daß die Temperatur der Schmelze, die Temperatur des Kühlmediums sowie der Druck im Kühlmedium so eingestellt werden, daß beim Austritt aus der Lochplatte die Oberfläche der Schmelze unmittelbar zu einem glattflächigen, geschlossenen Film mit einer Dicke von 10 bis 500 µm, vorzugsweise 20 bis 200 µm, erstarrt, unter dem die Schmelze aufschäumt, wobei ein Granulat mit einer abgerundeten Oberfläche und einer Schüttdichte von 10 bis 600 g/l ausgebildet wird.

2. Verfahren nach Anspruch 1, **dadurch gekennzeichnet, daß** die Schmelze aus der Lochplatte in das strömende Wasser eines Unterwassergranulators austritt.

3. Verfahren nach den Ansprüchen 1 oder 2, **dadurch gekennzeichnet, daß** in den Extruder ein Polypropylen eingegeben wird.

4. Verfahren nach Anspruch 1 und einem oder mehreren der weiteren Ansprüche, **dadurch gekennzeichnet, daß** die Temperatur des Kühlmediums bei 20 bis 80° C liegt, die Temperatur der Schmelze beim Austritt aus der Lochplatte 100 bis 300° C, vorzugsweise 160 bis 260° C, beträgt und im Bereich des Kühlmediums ein Druck von 1 bar wirksam ist.

5. Aufgeschäumtes Granulat, herstellbar nach dem Verfahren gemäß Anspruch 1, wobei das Granulat eine abgerundete, glattflächige, geschlossene Oberfläche mit einer Stärke von 10 bis 500 µm, vorzugsweise 20 bis 200 µm, und eine Schüttdichte von 10 bis 600 g/l und einen Durchmesser von 1 bis 20 mm, vorzugsweise 2 bis 8 mm, aufweist.

## Claims

1. A process for producing a foamed granulate, whereby a thermoplastics plastics material is fed into an extruder, the plastics material is melted and a propellant is fed in under pressure via one or more input spray nozzles and the melt, enriched by the propellant emerges via a perforated plate arranged at the extruder output and is granulated by a cutting device arranged behind the perforated plate, **characterised in that** the melt from the perforated plate is cooled under control, emerges immediately into a flowing coolant, that the temperature of the melt, the temperature of the coolant as well as the pressure in the coolant are adjusted such that on emerging from the perforated plate the surface of the melt solidifies immediately into a smooth surfaced enclosed film with a thickness of 10 to 500 µm, preferably 20 to 200 µm, under which the melt foams whereby a granulate with a rounded surface and a bulk density of 10 to 600 g/l is formed.

2. A process according to Claim 1, **characterised in that** the melt emerges from the perorated plate into the flowing water of an underwater granulator.

3. A process according to Claim 1 or Claim 2, **characterised in that** a polypropylene is fed into the extruder.

4. A process according to Claim 1 and one or more of the further Claims, **characterised in that** the temperature of the coolant lies between 20 and 80° C, the temperature of the melt on emergence from the perforated plate is 100 to 300° C, preferably 160 to 260° C and a pressure of 1 bar acts in the region of the cooling medium.

5. A foamed granulate which can be produced following to the process according to Claim 1, whereby the granulate has a rounded, smooth surfaced, enclosed outer surface with a thickness of 10 to 500 µm, preferably 20 to 200 µm, and a bulk density of 10 to 600 g/l and a diameter of 1 to 20 mm, preferably 2 to 8 mm.

## Revendications

1. Procédé de fabrication de granules expansés, dans lequel on charge une matière thermoplastique dans une extrudeuse, on fait fondre cette matière et on fait arriver par une ou plusieurs buses d'injection un agent propulseur sous pression et la masse fondue enrichie en agent propulseur sort en expansion en passant par une plaque perforée disposée à la sortie de l'extrudeuse et est transformée en granules par un dispositif de coupe installé en arrière de la plaque perforée, **caractérisé en ce que** la masse fondue refroidie de façon contrôlée à sa sortie de la plaque perforée sort directement dans un courant de fluide de refroidissement, **en ce que** la température de la masse fondue, la température du fluide de refroidissement ainsi que la pression dans le fluide de refroidissement sont réglées de manière que la surface de la masse fondue, à la sortie de la plaque perforée, se solidifie directement en formant un film jointif à surface lisse ayant une épaisseur de 10 à 500 µm, de préférence de 20 à 200 µm, sous lequel la masse fondue est expansée, en réalisant ainsi un produit granulé ayant une surface arrondie et une densité apparente de 10 à 600 g/l.

2. Procédé suivant la revendication 1, **caractérisé en ce que** la masse fondue sort de la plaque perforée dans le courant d'eau d'un granulateur immergé.

3. Procédé suivant la revendication 1 ou 2, **caractérisé en ce qu'**un polypropylène est introduit dans l'extrudeuse.

4. Procédé suivant la revendication 1 et une ou plusieurs des autres revendications, **caractérisé en ce que** la température du fluide de refroidissement est de 20 à 80°C, la température de la masse fondue à sa sortie de la plaque perforée est de 100 à 300°C, de préférence de 160 à 260°C, et une pression de 1 bar règne dans la zone du fluide de refroidissement.

5. Granules expansés, pouvant être produits par le procédé suivant la revendication 1, qui présentent une surface jointive lisse arrondie ayant une épaisseur de 10 à 500 µm, de préférence de 20 à 200 µm, et ayant une densité apparente de 10 à 600 g/l et un diamètre de 1 à 20 mm, de préférence de 2 à 8 mm.
